# FASCICULE DE BREVET EUROPEEN

(11) **EP 3 035 723 B1**
(45) Date de publication et mention de la délivrance du brevet: **01.05.2019**
(21) Numéro de dépôt: 15200905.6
(22) Date de dépôt: 17.12.2015
(51) Int. Cl.: H04W 8/18

(54) **PROCÉDÉ DE TRANSMISSION DE DONNÉES EN RELATION AVEC UNE COMMUNICATION**
DATENÜBERTRAGUNGSVERFAHREN IN VERBINDUNG MIT EINER KOMMUNIKATION
METHOD FOR TRANSMITTING DATA RELATING TO A COMMUNICATION

(30) Priorité: 19.12.2014 FR 1463014
(43) Date de publication de la demande: 22.06.2016
(73) Titulaire: Orange, 75015 Paris (FR)
(72) Inventeur: ZANOLIN, Gilles, 38320 EYBENS (FR); TOURNOUD, Sylvie, 38240 Meylan (FR)

(56) Documents cités:
- US-A1- 2002 126 814
- US-A1- 2003 133 553
- US-A1- 2010 329 438
- US-A1- 2014 105 374

## Description

### DOMAINE TECHNIQUE

L'invention se rapporte au domaine de télécommunications et concerne en particulier un procédé permettant d'enrichir une communication vocale.

### ART ANTERIEUR

Les technologies numériques et les terminaux intelligents de type smartphone font partie de notre quotidien depuis plusieurs années.

Le déploiement de ces technologies au sein de la population entraine une amélioration de certains services et l'adoption de nouveaux usages. De tels nouveaux usages se développent par exemple au travers d'applications téléchargées et installées sur les terminaux par les utilisateurs. Ces applications exploitent des capteurs du terminal et une connectivité sans fil pour offrir des services innovants et évolués. Par exemple, il est possible d'obtenir des coordonnées GPS correspondant à la localisation du terminal, de consulter et mettre à jour un agenda électronique, ou encore de prendre et consulter des notes. Ainsi, l'utilisateur peut accéder à tout moment à des informations utiles telles que par exemple sa position géographique, un numéro client, l'heure ou l'adresse d'un rendez-vous, ou encore un code confidentiel.

L'accès à ces informations nécessite toutefois un certain nombre de manipulations qui sont parfois délicates à réaliser dans certaines situations. Par exemple, lorsqu'un utilisateur est en communication avec un service commercial et qu'il doit rechercher un numéro de client mémorisé dans son terminal, les différentes manipulations à effectuer en cours d'appel peuvent s'avérer compliquées, et peuvent même conduire à une perte de la communication en cas de mauvaise manipulation. En particulier, pour certaines catégories de personnes peu à l'aise avec les technologies modernes, ces manipulations peuvent être particulièrement délicates, voire impossible à réaliser.

On remarque également que dans de nombreux cas, les utilisateurs qui entrent en communication avec un service donné se voient souvent demander les mêmes informations. Par exemple, un opérateur d'une compagnie d'assurance commence toujours une conversation téléphonique par demander un numéro de police d'assurance. Un service d'assistance ou de taxi demandent la plupart du temps l'adresse à laquelle se trouve la personne. Les utilisateurs qui contactent de tels services doivent rechercher l'information au cours de la communication ou bien la rechercher auparavant lorsqu'ils peuvent anticiper la demande.

De façon à simplifier les manipulations à réaliser dans le cadre d'une relation client, les fournisseurs de service éditent parfois des applications dédiées offrant un accès direct et personnalisé aux services qu'ils proposent. Par exemple, un service d'assistance ou de réservation de taxi peut distribuer une application pour terminal mobile exploitant avantageusement un capteur GPS et une connexion sans fil du terminal pour localiser de manière fiable une personne, l'identifier au travers d'un compte client et transmettre ces informations à un opérateur afin d'améliorer la qualité du service. Dans le document US 2010/329438A1 des données ("calling party information") mémorisées dans un terminal en cours de communication peuvent être transmises à un correspondant.

Le document US 2014/105374 A1 décrit un procédé de transmission de données entre un appelant et un appelé, dans lequel on recherche une information concernant le numéro appelé, on obtient une donnée ("additional information") associée à l'appelé et on transmet l'information vers l'appelé si l'information est trouvée dans la base de données.

Malgré tout, il reste souvent nécessaire d'établir une communication vocale avec certains services, et les manipulations visant à consulter des informations mémorisées dans le terminal en cours de communication afin de les transmettre à un correspondant posent un problème pour lequel il n'existe pas aujourd'hui de solution satisfaisante.

Il existe donc bien un besoin pour une solution technique permettant de simplifier les manipulations nécessaires pour transmettre des informations au cours d'une communication téléphonique.

### RÉSUMÉ DE L'INVENTION

À cet effet, l'invention concerne un procédé de transmission de données, sur un terminal, lors d'une communication, tel qu'il comporte, à l'établissement d'une communication initiée depuis le terminal vers un correspondant, des étapes de détermination du numéro d'appel du correspondant ; de lecture d'une information de configuration comprenant au moins une association entre le numéro d'appel déterminé et un identifiant de donnée, l'identifiant de donnée étant associé à une commande d'obtention de la donnée ; d'obtention, par l'exécution de la commande associée, de la donnée identifiée ; et de transmission de la donnée vers un destinataire.

Le procédé selon l'invention permet ainsi d'automatiser des transmissions de données adaptées à un contexte particulier lorsqu'un appel est déclenché vers un correspondant. Des données étant associées à un numéro d'appel particulier, le procédé permet de transmettre automatiquement des données particulièrement pertinentes vis-à-vis du correspondant appelé. Par exemple, le terminal peut transmettre automatiquement des coordonnées GPS et un numéro de police d'assurance lorsqu'un appel est déclenché vers un service d'assistance, réduisant ainsi les manipulations à effectuer durant la communication.

Selon une réalisation particulière, la donnée de configuration comprend en outre des modalités de transmission de la donnée identifiée.

Le procédé permet ainsi d'indiquer dans un fichier de configuration une adresse de destination pour la donnée ainsi que par exemple un canal de transport pour cette information. Par exemple, un tel fichier de configuration peut indiquer qu'un numéro de sécurité sociale doit être transmis par l'intermédiaire d'un SMS à destination d'un numéro de téléphone particulier. Selon un autre exemple, le fichier de configuration peut indiquer une URL (Universal Resource Locator) à utiliser pour transmettre par exemple des coordonnées GPS (Global Positioning system). Une même donnée peut être transmises vers plusieurs destinataires et selon des modalités différentes.

Selon une réalisation particulière, le procédé est tel qu'il comporte en outre une étape de contrôle d'une autorisation d'envoi de la donnée vers le destinataire.

Le procédé permet ainsi de garantir à l'utilisateur qu'aucune donnée ne sera transmise au correspondant sans son consentement. L'autorisation peut par exemple être accordée par l'utilisateur du terminal à chaque établissement d'appel ou encore lors du premier appel uniquement et pour tous les appels suivants, l'autorisation étant alors révocable à tout moment par l'intermédiaire d'une interface adaptée. Selon une réalisation particulière, les informations transmises sont affichées sur un écran du terminal lors de la communication.

Selon un mode de réalisation particulier, le procédé est tel qu'il comporte au préalable des étapes de téléchargement à partir d'un serveur d'au moins une association entre le numéro d'appel déterminé et un identifiant de donnée, et de création de l'information de configuration par association de l'identifiant de donnée téléchargé avec une commande d'obtention de la donnée identifiée.

Une ou plusieurs associations entre des numéros d'appels et des identifiants de données à transmettre sont mémorisées sur un serveur, par exemple sous la forme d'un fichier de configuration. Le terminal peut télécharger ce fichier de configuration, de façon à ce que les données à transmettre lors d'un appel puissent être obtenues par le terminal par l'exécution d'une commande associée à l'identifiant de donnée et transmises à un destinataire lors de l'établissement d'une communication vers le numéro d'appel associé. Le fichier de configuration peut également comporter une indication relative à la phase de l'appel à laquelle déclencher le transfert de données, comme par exemple le fait que la donnée doive être transmise à l'établissement ou à la fin de la communication. Il est ainsi possible pour un opérateur de service de sélectionner les données qu'il juge nécessaire de transmettre lorsqu'un utilisateur le contacte.

Selon une réalisation particulière, le procédé de configuration est tel que la donnée de configuration comprend, pour au moins un identifiant de données, une indication relative au caractère obligatoire ou facultatif de la transmission de la donnée identifiée.

Un degré d'importance est ainsi défini pour les différentes données pouvant être demandées par un fournisseur de service. De cette façon, le procédé peut par exemple interdire l'établissement de la communication lorsque qu'une donnée demandée par le fournisseur de service n'est pas disponible sur le terminal et éventuellement afficher un message invitant l'utilisateur à fournir la donnée manquante.

Selon un autre aspect, l'invention concerne un dispositif de transmission de données lors d'une communication tel qu'il comporte des modules de détermination du numéro d'appel d'un correspondant ; de lecture d'une donnée de configuration comprenant au moins une association entre le numéro d'appel déterminé et un identifiant de donnée, l'identifiant de donnée étant associé à une commande d'obtention de la donnée ; d'obtention, par l'exécution de la commande associée, de la donnée identifiée ; et de communication adaptés pour transmettre la donnée vers un destinataire.

L'invention concerne également un terminal tel qu'il comporte un dispositif de transmission de données.

Selon un autre aspect, l'invention concerne un programme d'ordinateur comportant les instructions pour l'exécution du procédé de transmission lorsque le programme est exécuté par un processeur.

L'invention concerne également un support d'informations lisible par un processeur sur lequel est enregistré un programme d'ordinateur comprenant les instructions pour l'exécution du procédé de transmission.

Les différents modes ou caractéristiques de réalisation précités peuvent être ajoutés indépendamment ou en combinaison les uns avec les autres, aux étapes du procédé de transmission.

Les terminaux, dispositifs, programmes et supports d'information présentent au moins des avantages analogues à ceux conférés par le procédé de transmission décrit ci-dessus.

### LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- La figure 1 représente une architecture réseau simplifiée adaptée pour la mise en oeuvre de l'invention selon un mode de réalisation particulier,
- La figure 2 illustre des étapes de configuration d'un terminal adapté pour la mise en oeuvre du procédé de transmission selon un mode particulier de réalisation, et
- La figure 3 illustre les principales étapes du procédé de transmission de données selon un mode particulier de réalisation,
- La figure 4 représente un exemple d'interface utilisateur adapté pour afficher des identifiants de données associés à un numéro d'appel, et
- La figure 5 illustre l'architecture d'un dispositif adapté pour la mise en oeuvre du procédé de transmission selon une réalisation particulière.

### DESCRIPTION D'UN MODE PARTICULIER DE RÉALISATION

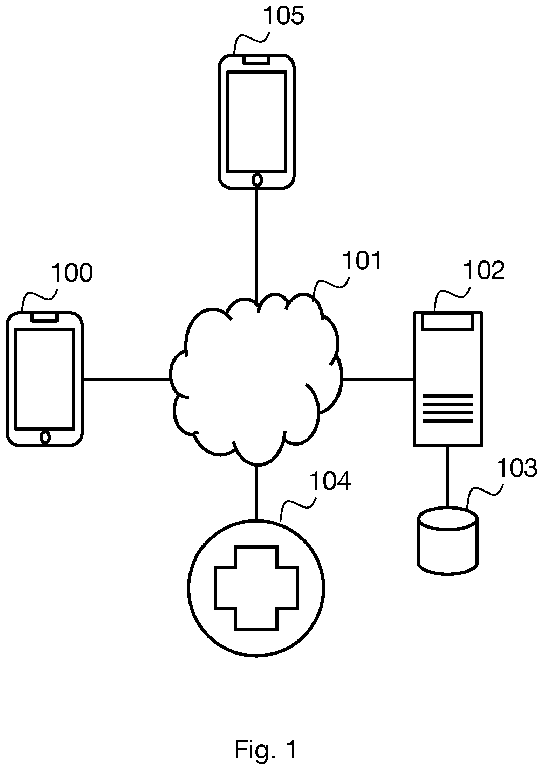

La **figure 1** illustre une architecture adaptée pour la mise en oeuvre de l'invention. Un terminal **100** de type smartphone est connecté à un réseau de communication **101**. Le réseau de communication **101** permet d'établir des communications vocales avec un service d'assistance **104** et d'envoyer par exemple des messages de type SMS (Short Message Service) vers d'autres terminaux comme par exemple vers le terminal **105.** Le réseau **101** permet en outre de connecter le terminal **100** au réseau Internet et d'échanger des informations numériques avec d'autres équipements en utilisant par exemple le protocole http (HyperText Transport Protocol), et en particulier de télécharger des données depuis le serveur **102.** Le serveur **102** est également connecté au réseau **101** et dispose d'une base de données **103** dans laquelle il peut enregistrer et lire des données.

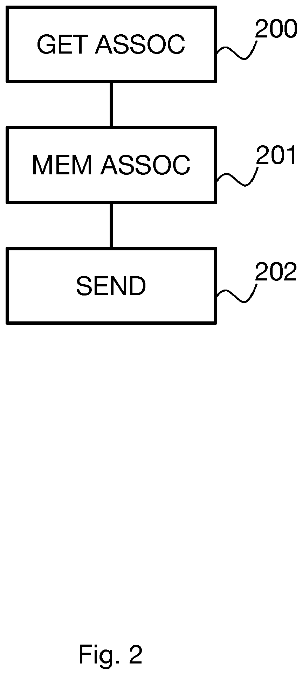

La **figure 2** illustre des étapes de configuration préalable d'un terminal selon un mode particulier de réalisation. Dans cet exemple, cette configuration est réalisée sur le serveur **102** et permet de configurer le terminal **100.**

Lors d'une première étape **200**, le serveur **102** obtient une association entre un numéro d'appel et au moins un identifiant d'au moins une donnée à transmettre. Le serveur peut obtenir une telle association suite à une action d'un opérateur de service tel que l'opérateur de service d'assistance **104**. Pour cela, le serveur **102** comporte un serveur Web permettant à un opérateur de service de configurer des associations entre des numéros d'appels et un ou plusieurs identifiants de données à transmettre au moyen d'une interface adaptée. L'opérateur de service peut ainsi se connecter au serveur en utilisant un navigateur Web et saisir d'une part un numéro d'appel, comme par exemple le numéro d'un centre de relation client, et d'autre part un ou plusieurs identifiants de données devant être transmises lorsqu'un utilisateur contacte le centre de relation client. Par exemple, l'opérateur du service **104** peut utiliser l'interface pour demander à ce que soient transmises les coordonnées GPS d'un terminal appelant, un numéro de sécurité sociale et un numéro d'appel d'un proche. Selon une réalisation particulière, l'opérateur peut en outre associer à chaque identifiant de donnée demandé une indication sur le caractère obligatoire ou facultatif de la donnée. Par exemple, il peut indiquer que le fait de transmettre des coordonnées GPS et un numéro de sécurité sociale est obligatoire, alors que la transmission de l'information relative au numéro d'appel d'un proche est facultative. Bien entendu, différents types d'identifiants de données peuvent être associés à un numéro d'appel selon le contexte. Par exemple, une compagnie d'assurance peut associer un type de donnée « numéro de police d'assurance» à son numéro d'appel.

À l'étape **202**, le serveur **102** mémorise l'association dans la base de données **103**.

Lors de l'étape **202**, le serveur **102** transmet au terminal **100**, sous la forme d'un fichier de configuration par exemple, au moins une association mémorisée.

Par exemple, le serveur peut transmettre un fichier de configuration au format XML formaté de la façon suivante :

```
 <assocs>
  <bindings "number" = "0123456">
     <data "id" = "location" "URL"="http://service.com"/>
     <data "id" = "insurance" "URL"="http://service.com"/>
     <data "id" = "contact" "optional" />
  </bindings>
  </assocs>
```

Ce fichier de configuration représente 3 identifiants de données associés au numéro d'appel « 0123456789 ». Les différents attributs et paramètres utilisés dans cet exemple sont donnés à titre illustratif et peuvent tout à fait prendre d'autres formes et être nommés différemment. L'identifiant « location » fait ici référence au fait que des coordonnées GPS sont requises lors d'un appel au numéro indiqué. L'identifiant « insurance» fait référence au fait qu'un numéro de sécurité sociale est requis lors d'un appel au service. Enfin, l'identifiant « contact » fait référence au numéro d'appel d'une personne à contacter. Ce champ contient un attribut « optional » dénotant le caractère facultatif de cette donnée. Les identifiants « location » et « insurance» sont en outre associés à des modalités de transmission. Dans cet exemple, ces modalités consistent en une URL vers laquelle les données doivent être transmises lors de l'appel, mais d'autres modalités peuvent être indiquées, comme par exemple un numéro de messagerie, une adresse de courrier électronique ou encore un identifiant de réseau social.

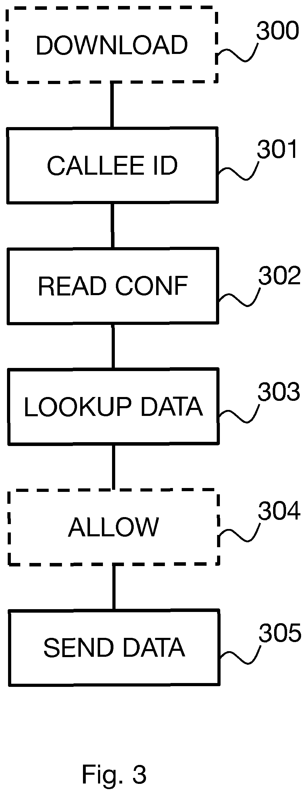

La **figure 3** illustre les principales étapes du procédé de transmission de données selon un mode particulier de réalisation.

Lors d'une première étape optionnelle **300,** le terminal **100** télécharge un fichier de configuration depuis du serveur **102.** Le terminal utilise pour cela un accès Internet, comme par exemple une connexion Wifi ou 3G du terminal, permettant d'établir une connexion selon le protocole http avec le serveur pour télécharger le fichier. L'adresse du serveur **102** peut être saisie par l'utilisateur dans un navigateur Web par exemple, ou bien préconfigurée au préalable dans le terminal. Cette étape de téléchargement d'un fichier de configuration peut correspondre à l'étape **202** de transmission d'un fichier de configuration décrite en référence à la **figure 2****.**

À la réception des données de configuration, le terminal **100** analyse les identifiants de données afin d'y associer une commande particulière permettant de les obtenir. Pour cela, le terminal peut utiliser une table dans laquelle chaque identifiant est associé à une commande permettant au terminal d'accéder à la donnée correspondante. La commande peut correspondre à une application à lancer, un script à exécuter, une recherche sur un mot clef à lancer sur le système de fichier du terminal ou encore une requête dans une base de données. Par exemple, l'identifiant de donnée « location » utilisé dans le fichier de configuration XML décrit plus haut peut être associé à une commande de lancement d'une application GPS. L'identifiant de donnée «insurance » peut être associé à une requête SQL dans une base de données ou un fichier de configuration du terminal. L'identifiant « contact » peut être associé à une recherche dans le carnet d'adresse du terminal ou à une commande d'envoi de SMS. Selon un mode particulier de réalisation de l'invention, les associations entre les identifiants de données et les commandes permettant d'y accéder peuvent être comprises dans le fichier de configuration téléchargé.

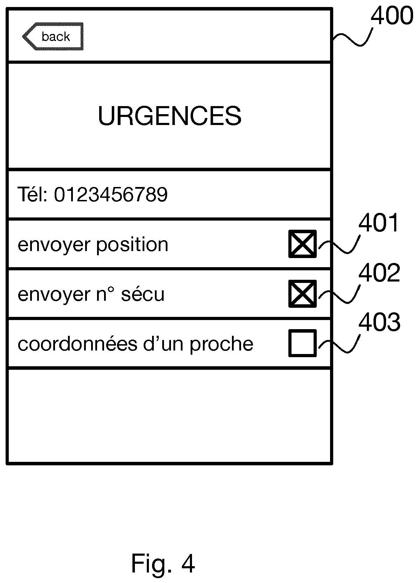

Ces différentes associations sont, selon un mode de réalisation particulièrement avantageux, mémorisées dans un carnet d'adresses du terminal dans un enregistrement correspondant au numéro d'appel. Lorsqu'elles sont stockées dans un carnet d'adresses, par exemple dans le carnet d'adresses principal du terminal **100**, des champs représentatifs des données associées au numéro d'appel peuvent être ajoutés à la fiche contact correspondant au numéro d'appel. La **figure 4** illustre à titre d'exemple et de manière schématique une interface graphique **400** pour une entrée d'un carnet d'adresses correspondant au numéro d'appel du service **104** sur laquelle sont présentées les données demandées par le service au travers du fichier de configuration.

À l'étape **301**, l'utilisateur du terminal **100** compose le numéro du service d'assistance **104** à partir du terminal. Lorsque l'appel est déclenché, le terminal détermine le numéro de l'appelant en consultant par exemple une base de données des appels en cours.

À partir du numéro d'appel, le terminal **100** recherche lors d'une étape **302** au moins un identifiant de donnée associé et mémorisé en base de données. Pour cela, le terminal consulte l'information de configuration mémorisée comprenant au moins une association entre le numéro d'appel déterminé et un identifiant de donnée. Par exemple, le terminal peut effectuer une recherche dans le carnet d'adresses afin de retrouver les identifiants de données associés lorsque le carnet d'adresses est utilisé pour mémoriser les associations entre les numéros d'appels et les identifiants de données. À partir de l'identifiant de donnée associé au numéro d'appel, le terminal consulte une table dans laquelle est mémorisé une commande dont l'exécution permet d'obtenir la donnée. Selon un mode particulier de réalisation, cette table est mémorisée dans une base de données, la recherche dans la table s'effectuant par une requête SQL utilisant l'identifiant de donnée comme clef.

À l'étape **303**, le terminal exécute au moins une commande associée à l'identifiant de donnée de façon à obtenir la donnée correspondante. Par exemple, la commande peut consister en une requête SQL permettant de rechercher une valeur mémorisée dans une base de données ou un fichier de configuration. Une telle base de données peut contenir une table dédiée à la mise en oeuvre de l'invention dans laquelle sont mémorisées les données correspondant à des identifiants, la table ayant été au préalable complétée par l'utilisateur. Selon une réalisation particulière, une table mémorisant les valeurs de données en association avec les identifiants correspondant est stockée sur un serveur accessible par une connexion Internet du terminal. De cette manière, les données peuvent être obtenues depuis différents terminaux de l'utilisateur. La commande peut également consister en un lancement d'une application installée au préalable sur le terminal, à interroger un capteur tel qu'un module de localisation GPS ou encore en un lancement d'une recherche parmi des notes, des messages ou encore par exemple dans le système de fichier du terminal.

Lors d'une étape optionnelle **304**, le terminal peut vérifier si une autorisation est accordée pour transmettre la donnée, une autorisation de transmettre une donnée pour un numéro d'appel donné pouvant être mémorisée pour les appels ultérieurs. Pour cela, le terminal peut, de manière classique, afficher un message sur l'écran du terminal invitant l'utilisateur à donner son accord pour la transmission de la donnée. Les autorisations de transmettre une donnée particulière peuvent également être données ou retirées par l'utilisateur à partir d'une fiche contact du carnet d'adresses, par exemple par l'intermédiaire des cases à cocher **401**, **402** et **403** illustrées sur la **figure 4**. Selon un mode particulier de réalisation, cette étape peut être réalisée avant l'exécution de la commande d'obtention d'une donnée.

Enfin, à l'étape **305**, lorsqu'une autorisation est accordée, le terminal transmet vers un destinataire la donnée obtenue par l'exécution de la commande. Selon une réalisation particulière, la donnée est transmise selon une modalité indiquée dans l'information de configuration. La modalité de transmission d'une donnée peut comprendre une adresse d'un destinataire, par exemple une URL, un numéro d'appel, une adresse email, ou encore par exemple une adresse sur un réseau social. Chaque donnée à transmettre peut être transmise vers une pluralité de destinataires selon différentes modalités. En référence à l'exemple cité plus haut, la donnée correspondant à l'identifiant « location » est transmise par l'intermédiaire d'une connexion Internet du terminal en utilisant l'URL « htp://service.com ». Une modalité de transmission peut également se rapporter à une transmission de la donnée vers un destinataire identifié par un numéro d'appel. De cette façon, une donnée peut être transmise par un service de messagerie tel qu'un service SMS. Par exemple, le terminal **100** peut émettre un SMS vers le terminal **105** lorsqu'il établit une communication vers le service d'assistance **104**. De cette façon, il est possible de prévenir automatiquement un proche lorsqu'un utilisateur sollicite un service d'assistance.

Selon une réalisation particulière, la communication peut être bloquée lorsque des données indiquées comme étant obligatoire dans l'information de configuration ne sont pas disponibles ou ne disposent pas d'une autorisation de transmission accordée par l'utilisateur. De cette manière, un opérateur de service peut s'assurer qu'il ne sera pas contacté par un utilisateur qui ne possède pas une information nécessaire pour rendre le service, comme par exemple un identifiant client pour un service de relation clientèle.

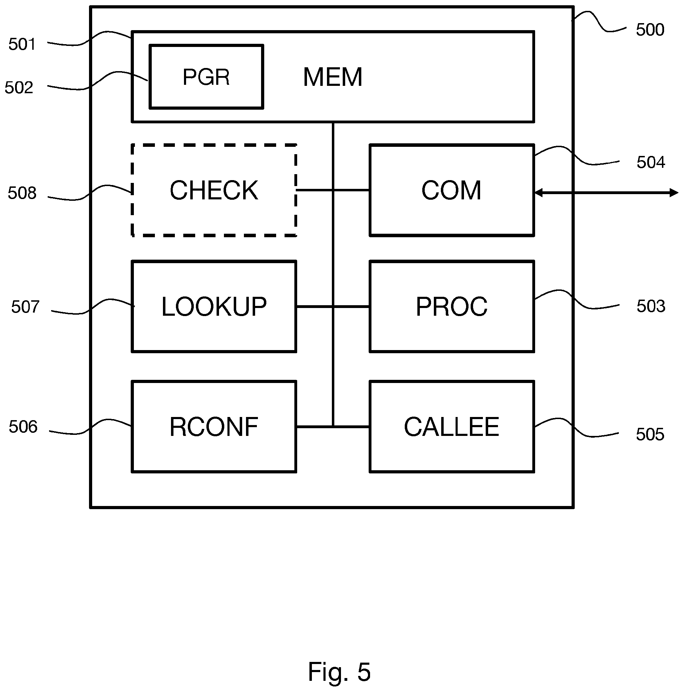

La **figure 5** illustre un dispositif **500** mettant en oeuvre le procédé de transmission selon un mode particulier de réalisation de l'invention. Le dispositif comprend un espace de stockage **501**, par exemple une mémoire MEM, une unité de traitement **503** équipée par exemple d'un processeur PROC. L'unité de traitement peut être pilotée par un programme **502**, par exemple un programme d'ordinateur PGR, mettant en oeuvre le procédé de transmission tel que décrit dans l'invention en référence à la **figure 3**, et notamment les étapes de détermination du numéro d'appel du correspondant, de lecture d'une information de configuration comprenant au moins une association entre le numéro d'appel déterminé et un identifiant de donnée, l'identifiant de donnée étant associé à une commande d'obtention de la donnée, d'obtention, par l'exécution de la commande associée, de la donnée identifiée, et de transmission de la donnée vers un destinataire.

La mémoire 501 enregistre par exemple les associations entre les numéros d'appels, les identifiants de données et les commandes d'obtention des données.

À l'initialisation, les instructions du programme d'ordinateur 502 sont par exemple chargées dans une mémoire RAM (Random Access Memory) avant d'être exécutées par le processeur de l'unité de traitement **503.** Le processeur de l'unité de traitement **503** met en oeuvre les étapes du procédé de transmission selon les instructions du programme d'ordinateur **502.**

Pour cela, le dispositif comprend, outre la mémoire **501**, un module de communication **504** (COM) permettant au dispositif de transmettre des données obtenues par l'exécution de commandes associées à des identifiants de données, lesdits identifiants étant associés à un numéro d'appel dans une information de configuration. Le module de communication peut en outre servir à télécharger une information de configuration comprenant un ou plusieurs identifiants de données associés à un numéro d'appel. Le module de communication peut également servir à établir des communications vers un numéro d'appel. Ce module de communication **504** peut correspondre par exemple à une interface réseau de type Wifi, Bluetooth, GSM, 3G ou Ethernet et permet d'établir des connexions de données et/ou des communications vocales.

Le dispositif comprend également un module **505** (CALLEE) de détermination d'un numéro appelé. Il peut s'agir par exemple d'un module de gestion de communication GSM ou d'un module d'accès à une base de donnée de communications en cours.

Le dispositif **500** comprend en outre un module **506** (RCONF) de lecture d'une information de configuration comprenant au moins une association entre le numéro d'appel déterminé et un identifiant de donnée, l'identifiant de donnée étant associé à une commande d'obtention de la donnée. Ce module **506** peut être par exemple un module d'accès à une base de données telle qu'une base de données de carnet d'adresses du terminal.

Le dispositif comprend aussi un module **507** (LOOKUP) adapté pour exécuter une commande dans le but d'obtenir une donnée associée à un identifiant de donnée, comme par exemple un module interpréteur de commandes ainsi qu'optionnellement, un module **508** (CHECK) de vérification d'une autorisation de transmettre une donnée vers un destinataire.

Selon une réalisation particulière, le dispositif est intégré dans un terminal de communication de type smartphone, tablette ou encore dans un ordinateur personnel.

## Revendications

1. Procédé de transmission de données, sur un terminal, lors d'une communication, **caractérisé en ce qu'**il comporte, à l'établissement d'une communication initiée depuis le terminal vers un correspondant, les étapes suivantes :
- Détermination (301) du numéro d'appel du correspondant,
- Lecture (302) d'une information de configuration comprenant au moins une association entre le numéro d'appel déterminé et un identifiant de donnée, l'identifiant de donnée étant associé à une commande d'obtention de la donnée,
- Obtention (303), par l'exécution de la commande associée, de la donnée identifiée, et
- Transmission (305) de la donnée vers un destinataire.

2. Procédé selon la revendication 1 **caractérisé en ce que** l'information de configuration comprend en outre des modalités de transmission de la donnée identifiée.

3. Procédé selon l'une quelconque des revendications 1 ou 2 **caractérisé en ce qu'**il comporte en outre une étape de contrôle d'une autorisation d'envoi de la donnée vers le correspondant.

4. Procédé selon l'une quelconque des revendications précédentes **caractérisé en ce qu'**il comporte au préalable les étapes suivantes :
- Téléchargement à partir d'un serveur d'au moins une association entre le numéro d'appel déterminé et un identifiant de donnée, et
- Création de l'information de configuration par association de l'identifiant de donnée téléchargé avec une commande d'obtention de la donnée identifiée.

5. Dispositif de transmission de données lors d'une communication **caractérisé en ce qu'**il comporte des modules de:
- Détermination (505) du numéro d'appel d'un correspondant,
- Lecture (506) d'une donnée de configuration comprenant au moins une association entre le numéro d'appel déterminé et un identifiant de donnée, l'identifiant de donnée étant associé à une commande d'obtention de la donnée,
- Obtention (507), par l'exécution de la commande associée, de la donnée identifiée, et
- Communication (504) adapté pour transmettre la donnée vers un destinataire.

6. Terminal **caractérisé en ce qu'**il comporte un dispositif de transmission de données selon la revendication 5.

7. Programme d'ordinateur comportant les instructions pour l'exécution du procédé de transmission selon l'une quelconque des revendications 1 à 4, lorsque le programme est exécuté par un processeur.

8. Support d'informations lisible par un processeur sur lequel est enregistré un programme d'ordinateur comprenant des les instructions pour l'exécution du procédé de transmission selon l'une quelconque des revendications 1 à 4.

## Patentansprüche

1. Verfahren zum Übertragen von Daten auf ein Endgerät während einer Kommunikation, **dadurch gekennzeichnet, dass** es beim Aufbauen von einer Kommunikation, die von dem Endgerät initiiert wird, an einen Kommunikationspartner, die folgenden Schritte umfasst:
- Bestimmen (301) der Rufnummer des Kommunikationspartners,
- Lesen (302) von einer Konfigurationsinformation, die mindestens eine Verbindung zwischen der bestimmten Rufnummer und einer Datenkennung aufweist, wobei die Datenkennung einem Befehl zum Erfassen des Datums zugeordnet wird,
- Erfassen (303) des identifizierten Datums durch Ausführen des zugeordneten Befehls, und
- Übertragen (305) des Datums an einen Empfänger.

2. Verfahren nach Anspruch 1, **dadurch gekennzeichnet, dass** die Konfigurationsinformation ferner Übertragungsmodalitäten des identifizierten Datums aufweist.

3. Verfahren nach einem der Ansprüche 1 bis 2, **dadurch gekennzeichnet, dass** es ferner einen Schritt des Überprüfens einer Erlaubnis zum Senden des Datums an den Kommunikationspartner aufweist.

4. Verfahren nach einem der vorhergehenden Ansprüche, **dadurch gekennzeichnet, dass** es vorher die folgenden Schritte aufweist:
- Herunterladen von einem Server der mindestens einen Verbindung zwischen der bestimmten Rufnummer und einer Datenkennung, und
- Erstellen der Konfigurationsinformation durch Verbinden der heruntergeladenen Datenkennung mit einem Befehl zum Erfassen des identifizierten Datums.

5. Vorrichtung zum Übertragen von Daten bei einer Kommunikation, **dadurch gekennzeichnet, dass** sie Module aufweist zum:
- Bestimmen (505) der Rufnummer des Kommunikationspartners,
- Lesen (506) eines Konfigurationsdatums, die mindestens eine Verbindung zwischen der bestimmten Rufnummer und einer Datenkennung aufweist, wobei die Datenkennung einem Befehl zum Erfassen des Datums zugeordnet ist,
- Erfassen (507) des identifizierten Datums durch Ausführen des zugeordneten Befehls, und
- Kommunizieren (504), das geeignet ist, um das Datum an einen Empfänger zu übertragen.

6. Endgerät, **dadurch gekennzeichnet, dass** es eine Vorrichtung zum Übertragen von Daten nach Anspruch 5 aufweist.

7. Computerprogramm, das die Anweisungen für das Ausführen des Verfahrens zum Übertragen nach einem der Ansprüche 1 bis 4 aufweist, wenn das Programm von einem Prozessor ausgeführt wird.

8. Prozessorlesbarer Informationsträger, auf dem ein Computerprogramm aufgezeichnet ist, das die Anweisungen für das Ausführen des Verfahrens zum Übertragen nach einem der Ansprüche 1 bis 4 aufweist.

## Claims

1. Method for transmitting data, on a terminal, in a call, **characterized in that** it comprises, when a call initiated from the terminal is set up to another party, the following steps:
- determining (301) the call number of the correspondent,
- reading (302) a configuration information item comprising at least one association between the determined call number and a datum identifier, the datum identifier being associated with a command to obtain the datum,
- obtaining (303), by executing the associated command, the identified datum, and
- transmitting (305) the datum to a recipient.

2. Method according to Claim 1, **characterized in that** the configuration information item further comprises methods for transmitting the identified datum.

3. Method according to either one of Claims 1 and 2, **characterized in that** it further comprises a step of checking an authorization to send the datum to the correspondent.

4. Method according to any one of the preceding claims, **characterized in that** it first comprises the following steps:
- downloading, from a server, at least one association between the determined call number and a datum identifier, and
- creating the configuration information item by associating the downloaded datum identifier with a command to obtain the identified datum.

5. Device for transmitting data in a call **characterized in that** it comprises modules for:
- determining (505) the call number of another party,
- reading (506) a configuration datum comprising at least one association between the determined call number and a datum identifier, the datum identifier being associated with a command to obtain the datum,
- obtaining (507), by executing the associated command, the identified datum, and
- communicating (504) appropriately to transmit the datum to a recipient.

6. Terminal, **characterized in that** it comprises a data transmission device according to Claim 5.

7. Computer program comprising the instructions for the execution of the transmission method according to any one of Claims 1 to 4, when the program is run by a processor.

8. Processor-readable information medium on which is stored a computer program comprising the instructions for the execution of the transmission method according to any one of Claims 1 to 4.
